# EUROPÄISCHE PATENTSCHRIFT

(11) **EP 1 162 029 B1**
(45) Veröffentlichungstag und Bekanntmachung des Hinweises auf die Patenterteilung: **19.03.2003**
(21) Anmeldenummer: 00110365.4
(22) Anmeldetag: 15.05.2000
(51) Int. Cl.: B23Q 17/09

(54) **Verfahren und Vorrichtung zum Überwachen des Verschleisszustandes eines Werkzeuges**
Method and device for monitoring the wear of a tool
Méthode et dispositif de surveillance de l'usure d'un outil

(43) Veröffentlichungstag der Anmeldung: 12.12.2001
(73) Patentinhaber: Prometec GmbH, 52070 Aachen (DE)
(72) Erfinder: Kluft, Werner Wilhelm Dr.-Ing, 52078 Aachen (DE); Reuber, Martin Josef Dr.-Ing., 52074 Aachen (DE); Kratz, Heinz-Hubert Dipl.-Ing., 52072 Aachen (DE)
(74) Vertreter: Dallmeyer, Georg, Dipl.-Ing.

(56) Entgegenhaltungen:
- EP-A- 0 684 363
- WO-A-97/05982
- US-A- 5 587 931

## Beschreibung

Die Erfindung betrifft ein Verfahren zum Überwachen des Verschleißzustandes eines Werkzeuges bei der spanabhebenden Bearbeitung eines metallischen Werkstücks durch eine Werkzeugmaschine nach dem Oberbegriff des Anspruchs 1.

Ziel der Verschleißüberwachung ist es, aus dem während der Zerspanung aufgenommenen Sensorsignal auf den Verschleißfortschritt des Werkzeugs zurückzuschließen. Dazu werden Sensoren im Arbeitsraum der Werkzeugmaschinen installiert, um aus dem Sensorsignal auf den Verschleißzustand des Werkzeugs zu schließen.

Aus der JP 9323239 A ist ein Verschleißdetektor für rotierende Schneidwerkzeuge sowie ein Überwachungsverfahren bekannt, bei dem das auf das Werkzeug einwirkende Torsionsmoment gemessen wird und die Messsignale einem Wavelet-Konverter zugeführt werden. Durch Transformieren der Messsignale des Sensors mittels einer Wavelet-Funktion in Wavelet-Koeffizienten können Kennwerte ermittelt werden, die für den Verschleißzustand repräsentativ sind.

Aus der US 5,587,931 ist ein Werkzeugüberwachungssystem beschrieben, bei dem die Werkzeugüberwachung auf der Basis eines Stromverbrauchssignals erfolgt. Als weitere bekannte Sensoren für die Werkzeugüberwachung werden auch Körperschall und Schwingungssensoren genannt.

Der Erfindung liegt die Aufgabe zugrunde, das eingangs genannte Verfahren derart zu verbessern, dass eine quantitative und qualitative Analyse des Verschleißzustandes mit einer verbesserten Reproduzierbarkeit möglich ist.

Zur Lösung dieser Aufgabe dient ein Verfahren mit den Merkmalen des Anspruchs 1.

Die Erfindung sieht in vorteilhafter Weise vor, dass die aus dem Zerspanungsprozess resultierende Schwingungen eines zumindest aus dem Werkzeug und dem metallischen Werkstück bestehenden Schwingungssystems mit mindestens einem Schwingungssensor aufgenommen werden. Die Analyse des Schwingungssignals ist im Hinblick auf den Verschleißzustand des Werkzeugs um ca. den Faktor 50 sensitiver und erlaubt daher eine qualitativ und quantitativ exaktere Aussage über den Verschleißzustand des Werkzeugs. Die ermittelten Verschleißzustandskennwerte ermöglichen eine Beurteilung, wie weit der Werkzeugverschleiß an unterschiedlichen Stellen des Werkzeugs fortgeschritten ist. Dies ist insbesondere von Bedeutung bei schwer bearbeitbaren Werkstücken, bei denen es wesentlich ist, dass das Werkstück ohne Werkzeugwechsel bearbeitet wird. Auf diese Weise kann vor dem Beginn der Bearbeitung eines neuen Werkstücks entschieden werden, ob ein Werkzeugwechsel erforderlich ist. Die Analyse der Schwingungen ist der Messung eines Drehmoment- oder Kraftsignals erheblich überlegen, da die Veränderungen von Kraft- oder Drehmomentsignalen nicht unbedingt einen Rückschluss auf den Verschleißzustand erlauben und auch auf andere Gründe zurückgeführt werden kann.

Das Schwingungssignal kann im dreidimensionalen Raum in mindestens einer Raumachse erfasst werden.

Besonders bevorzugt wird das Schwingungssignal in allen drei Raumachsen erfasst. Die in drei Raumachsen vorliegenden Verschleißzustandskennwerte ermöglichen auch eine Lokalisierung des Verschleißes entlang der Kontaktfläche des Werkzeugs mit dem Werkstück bzw. entlang der Schneidkante des Werkzeuges. Auf diese Weise ist auch eine qualitative Beurteilung des Verschleißzustandes möglich und beispielsweise feststellbar, ob das Werkzeug für bestimmte Anwendungszwecke noch brauchbar ist.

Das dreidimensionale Schwingungssignal kann in jeder Raumachse einzeln ausgewertet werden, wobei sich jeweils ein richtungsorientiertes Schwingungssignal ergibt. Mittels der Wavelet-Funktion können aus dem jeweiligen Waveiet-Koeffizienten jeweils richtungsorientierte Verschleißzustandskennwerte gebildet werden.

Das dreidimensionale Schwingungssignal kann in jeder Raumachse einzeln ausgewertet werden, wobei nach der Transformation der drei richtungsorientierten Schwingungssignale mittels der Wavelet-Funktion aus den Wavelet-Koeffizienten in jeder Raumachse ein einziger resultierender Verschleißzustandskennwert, z.B. durch Addition, Verhältnisbildung, Multiplikation oder Vektoraddition gebildet werden kann.

Nach einer weiteren Alternative kann das dreidimensionale Schwingungssignal in jeder Raumachse einzeln ausgewertet werden, wobei nach der Transformation der drei richtungsorientierten Schwingungssignale mittels der Wavelet-Funktion aus dem jeweiligen Wavelet-Koeffizienten drei Verschleißzustandskennwerte gebildet werden, die z.B. durch Addition, Verhältnisbildung oder Multiplikation zu einem einzigen Verschleißzustandskennwert zusammengefasst werden.

Alternativ kann das dreidimensionale Schwingungssignal in jeder Raumachse einzeln ausgewertet werden und vor der Transformation mittels der Wavelet-Funktion zu einem resultierenden Schwingungssignal z.B. durch Addition, Verhältnisbildung, Multiplikation oder Vektoraddition zusammengefasst werden, wobei das resultierende Schwingungssignal mittels der Wavelet-Funktion transformiert wird, um aus dem Wavelet-Koeffizienten einen einzigen Verschleißzustandskennwert zu bilden.

Das Schwingungssignal wird vorzugsweise an dem Werkzeug, an der Werkzeugaufnahme oder den die Werkzeugaufnahme mittelbar oder unmittelbar tragenden Maschinenkomponenten aufgenommen.

Alternativ kann das Schwingungssignal an dem Werkstück, an der Werkstückaufnahme oder den die Werkstückaufnahme mittelbar oder unmittelbar tragenden Maschinenkomponenten der Werkzeugmaschine aufgenommen werden.

Als Schwingungssensor kann ein Beschleunigungssensor, ein Schwinggeschwindigkeitssensor, ein Schwingwegsensor, oder im höherfrequenten Bereich ein Körperschallsensor oder ein Schallemissionssensor verwendet werden.

Vorzugsweise wird der Verschleißzustand eines Werkzeugs bei einer spanabhebenden Bearbeitung mit unterbrochenem Schnitt überwacht.

Ein besonders bevorzugtes Einsatzgebiet ist die Verschleißzustandsüberwachung eines Fräswerkzeuges beim Freiformfräsen.

Das Überwachungsverfahren kann z.B. beim Schlichtfräsen mit kugelförmigem Fräswerkzeug eingesetzt werden. Hierbei ist das Werkzeug aufgrund ständig wechselnder Kontaktflächen unterschiedlichen Kontaktbedingungen ausgesetzt.

Der Verschleißzustand kann bei wiederholter Bearbeitung gleichartiger Werkstücke anhand der Veränderung des Verschleißzustandskennwertes in Relation zu einem Ausgangskennwert oder in Relation zu einem vorgegebenen Grenzkennwert bei vergleichbarem Schnitt-, Eingriffs- und/oder Kontaktbedingungen zwischen dem Werkzeug und Werkstück an denselben oder unterschiedlichen Werkstücken beurteilt werden.

Im Werkzeugbau wird häufig nur ein einziges Formteil hergestellt, so dass es dann erforderlich ist, die vorgegebenen Messstellen mit vergleichbaren Schnitt-, Eingriffsund/oder Kontaktbedingungen an demselben Werkstück festzulegen.

Die vorgegebenen Messstellen mit vergleichbaren Schnitt-, Eingriffs- und/oder Kontaktbedingungen zwischen Werkzeug und Werkstück können aus den in einem NC-Fertigungsprogramm der Werkzeugmaschine enthaltene Daten ermittelt werden, wozu beispielsweise die Weg- und Positionsdaten herangezogen werden können. Die Messstellen können durch eine Software, welche das NC-Fertigungsprogramm in einem Rechner (Postprozessor) analysiert, ermittelt werden. Diese Software kann beispielsweise das NC-Fertigungsprogramm an den ermittelten vergleichbaren Messstellen um Programmschritte ergänzen, welche die Identifikation der vergleichbaren Messstellen ermöglicht. Dadurch kann das NC-Fertigungsprogramm eine Auswerteeinheit ansteuern, die die Verschleißkennwerte an den vorgegebenen Messstellen vergleicht und beurteilt.

Die Software zur Analyse des NC-Fertigungsprogramms kann auch in der Lage sein, mehrere verschiedenartige vergleichbare Messstellen nach Klassen einzuteilen, die jeweils verschiedenartige Kontaktzonen zwischen Werkzeug und Werkstück entlang der Werkzeugschneide aufweisen, aber dennoch ähnliche bzw. vergleichbare Schnitt- und Eingriffsbedingungen haben.

Die vorgegebenen Messstellen mit vergleichbaren Schnitt-, Eingriffs- und/oder Kontaktbedingungen zwischen Werkzeug und Werkstück können in Abhängigkeit von einem oder mehreren der nachfolgenden Parameter, nämlich der Werkstück-Rohteilgeometrie, der Werkstück-Fertigteilgeometrie, den dazwischenliegenden Schnittflächen, den Zerspanungsparametern und der Werkzeuggeometrie ermittelt werden.

Bei einer bevorzugten Weiterbildung der Erfindung ist vorgesehen, dass in Abhängigkeit von den Verschleißzustandskennwerten der Verschleißzustand des Werkzeuges auf einer zwei- oder dreidimensionalen Abbildung des Werkzeuges entlang der Werkzeugschneide quantitativ angezeigt wird. Dabei kann die Abbildung des Werkzeuges beispielsweise auf einer Displayeinheit der Werkzeugmaschine angezeigt und die Verschleißzonen an der Werkzeugkontur gekennzeichnet werden. Eine Bedienungsperson kann aufgrund des optisch angezeigten qualitativen und quantitativen Verschleißzustandes eine rechtzeitige Entscheidung darüber treffen, ob das Werkzeug ausgewechselt werden muß.

Weitere vorteilhafte Merkmale der Erfindung sind den weiteren Unteransprüchen zu entnehmen.

Im folgenden wird unter Bezugnahme auf die Zeichnungen ein Ausführungsbeispiel der Erfindung näher erläutert.

Es zeigen:
- Fig. 1: eine vergleichende Darstellung des Messsignals eines arbeitsscharfen und eines verschlissenen Werkzeugs,
- Fig. 2: die Schnitt-, Eingriffs- und Kontaktbedingungen zwischen Werkzeug und Werkstück und deren Einflussgrößen, und
- Fig. 3: eine schematische Darstellung der Ermittlung vergleichbarer Messstellen.

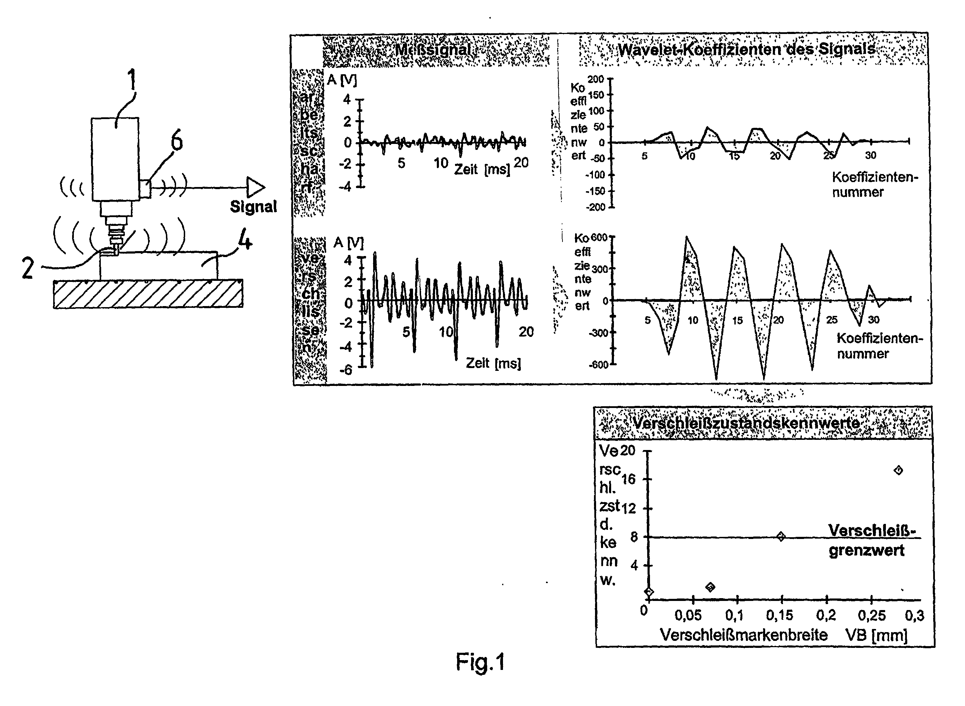

Die neben dem Diagramm gezeigte schematische Darstellung in Fig. 1 zeigt die Bearbeitung eines Werkstücks 4 mit einem Werkzeug 2, vorzugsweise einem Fräswerkzeug einer Werkzeugmaschine 1. Von der Werkzeugmaschine 1 ist aus Vereinfachungsgründen lediglich das Gehäuse der Maschinenspindel dargestellt, an dem ein Schwingungssensor 6 befestigt ist, der die während des ZerspanungsprQzesses entstehenden Schwingungssignale aufnimmt. Die detektierten Schwingungssignale werden von einem zumindest aus dem Werkzeug 2 und dem metallischen Werkstück 4 bestehenden Schwingungssystem emittiert. Der Schwingungssensor 6 kann auch an anderen Stellen der Werkzeugmaschine befestigt werden, wobei der Anbringungsort möglichst nah an der Kontaktstelle zwischen Werkzeug 2 und Werkstück 4 angeordnet sein sollte, damit das Schwingungssignal nicht zu stark gedämpft wird. Besonders bevorzugt wird ein dreidimensionaler Schwingungssensor 6 verwendet, der die richtungsorientierte Aufnahme des Schwingungssignals ermöglicht.

Die vom Schwingungssensor 6 aufgenommenen, zeitlichen Signalverläufe messen die Schwingungen infolge der Anregung aus dem Zerspanungsprozess. Um Signalmerkmale hervorzuheben, die sich mit dem Werkzeugverschleiß besonders stark ändern, wird das Signal mittels der Wavelet-Analyse transformiert. Das Verfahren der Wavelet-Analyse ist beispielsweise veröffentlicht in: M. Holschneider, R. Kronland-Martinet, J. Morlet, Ph. Tchamitchian, "A Real Time Algorithm For Signal Analysis with the Help of Wavelet-Transform", in Wavelets, Time-Frequency Methods and Phase Space, J.M. Combes, A. Grossmann and Ph. Tchamitchian, Eds. Berlin: Springer, ITPI 1989, Seiten 286 bis 297.

Beispielsweise kann die Wavelet-Transformation nach der Daubechies-Methode durchgeführt werden (Daubechies: The wavelet transform, time-frequency localization and Signal analysis. IEEE Tranactions on Information Theory 36(5) (1990) Seiten 961 bis 1005).

Fig. 1 zeigt im Vergleich des Messsignal eines arbeitsscharfen Werkzeugs und eines verschlissenen Werkzeugs 2. Diese Messsignale werden einer Wavelet-Transformation unterzogen. Ergebnis der Wavelet-Transformation sind die Wavelet-Koeffizienten des Schwingungssignals, deren Höhen und Verteilung sich für arbeitsscharfe und unterschiedlich stark verschlissene Werkzeuge deutlich unterscheiden. Die entstehenden Verläufe der Wavelet-Koeffizienten werden zu Verschleißzustandskennwerten verdichtet oder als Basis zur Berechnung von Verschleißzustandskennwerten verwendet, die für die Bewertung des Verschleißzustandes des Werkzeuges herangezogen werden können. Überschreiten die Verschleißzustandskennwerte festgelegte Grenzkennwerte (in der Zeichnung als Verschleißgrenzwert angegeben), ist das Werkzeug als verschlissen anzusehen.

Aus dem Diagrammteil der Fig. 1, das die Wavelet-Koeffizienten des Schwingungssignals gegenüberstellt, ist erkennbar, dass der Koeffizientenwert bei einem verschlissenen Werkzeug 2 auf erheblich höhere Werte ansteigt als bei dem arbeitsscharfen Werkzeug. Die Darstellungen zeigen jeweils den Koeffizientenwert in Abhängigkeit von der Koeffizientennummer. Aus dem Wavelet-Koeffizienten können Verschleißzustandskennwerte berechnet werden. Das untere Diagramm in Fig. 1 zeigt die Abhängigkeit des Verschleißzustandskennwertes von der Verschleißmarkenbreite. In das Diagramm ist auch ein Verschleißgrenzwert eingezeichnet, bei dessen Erreichen ein Auswechseln des Werkzeugs 2 erfolgen sollte.

Beim Fräsen von Freiformflächen, kommt es aufgrund der komplexen Geometrie der bearbeiteten Werkstücke während der Bearbeitung zu ständig wechselnden Schnitt-, Eingriffs- und/oder Kontaktbedingungen zwischen Werkzeug 2 und Werkstück 4.

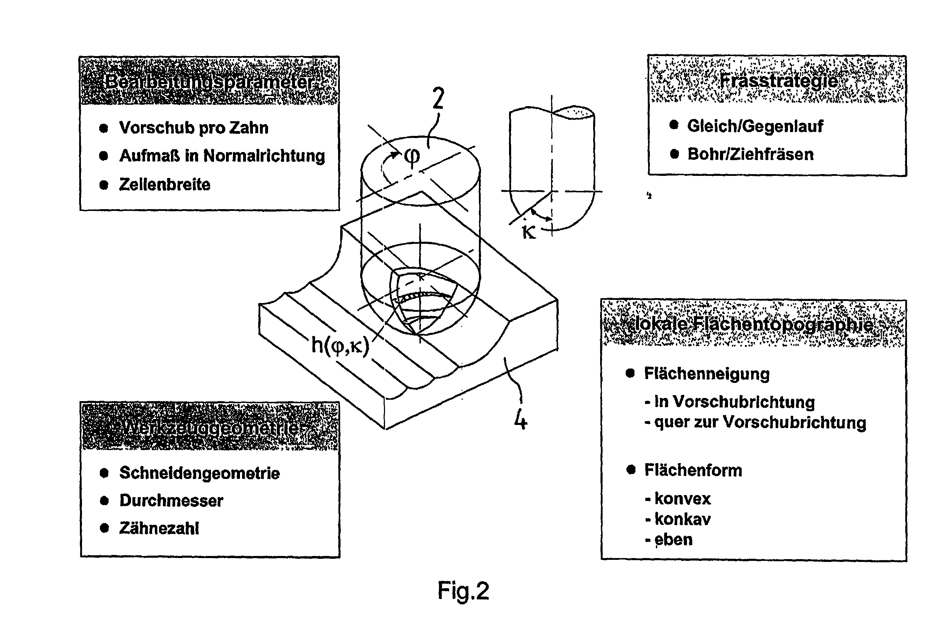

Aus den in Fig. 2 dargestellten Einflussgrößen resultieren unterschiedliche Kontaktverhältnisse und wechselnde Spanbildungsmechanismen. Vor allem die Variation von geometrischen Kenngrößen, beispielsweise die Orientierung zwischen Werkzeugachse und Werkstückoberfläche hat maßgeblichen Einfluss auf die Bewegungsbahnen der einzelnen Scheidendenpunkte durch das abzutragende Werkstoffvolumen. In Abhängigkeit davon kommt es zu veränderten Verläufen von Spanungsdicke und Spanungsbreite während eines Schneideneingriffs und damit auch zu veränderten dynamischen Anregungen aus dem Zerspanungsprozess, deren Auswirkungen von dem Schwingungssensor 6 erfasst werden.

In Fig. 2 sind beispielsweise die Einflussgrößen auf die Schnitt-, Eingriffs- und/oder Kontaktbedingungen beim Fräsen von Freiformflächen dargestellt.

Wichtige Einflussgrößen sind die Bearbeitungsparameter, die Frässtrategie, die Werkzeuggeometrie und die lokale Flächentopographie.

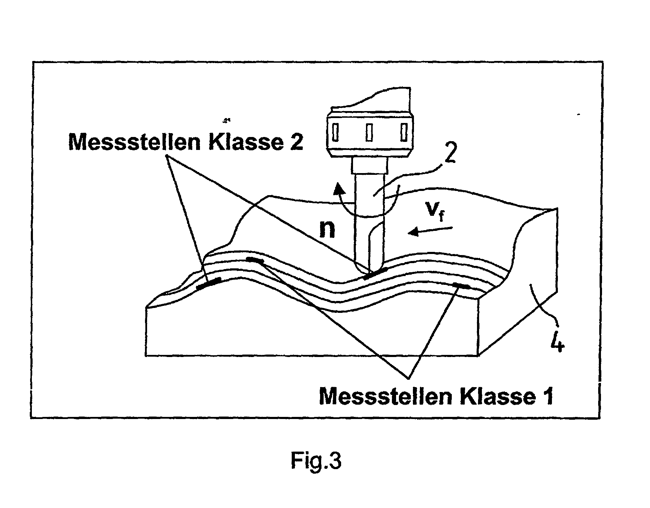

Um die wechselnden Schnitt-, Eingriffs- und Kontaktbedingungen im Rahmen einer Verschleißzustandsbewertung berücksichtigen zu können, wird die Analyse des Verschleißzustandes an festgelegten Messstellen des Werkstücks 4 durchgeführt. Ziel der Messstellenanalyse ist es, die Verschleißanalyse an mehreren verschiedenartigen Kontaktzonen entlang der Werkzeugschneide ähnlicher bzw. vergleichbarer Schnitt-, Eingriffs- und Kontaktbedingungen Innerhalb eines oder unterschiedlicher Werkstücke 4 durchzuführen. Hierzu sind Informationen über die geometrische Gestaltung des Werkstücks 4, des Werkzeugs 2 und ihrer Orientierung zueinander erforderlich, die in einem NC-Fertigungsprogramm der entsprechenden Werkzeugmaschine 1 verfügbar sind. Die während der Bearbeitung auftretenden Schnitt-, Eingriffs- und Kontaktbedingungen können dabei in Klassen ähnlicher bzw. vergleichbarer Bearbeitungssituationen zusammengefasst werden, wie in Fig. 3 beisplelhaft dargestellt. Auf der Basis der NC-Programmdaten und mit der Beschreibung dieser festgelegten Messstellenklassen werden geeignete Kontaktzonen entlang der Werkzeugschneide zur Verschleißzustandsbewertung ermittelt. An den zu einer Messstellenklasse gehörenden Messstellen werden die Verschleißzustandskennwerte vergleichend analysiert, so dass der Verschleißfortschritt während einer Bearbeitung verfolgt und erkannt werden kann.

Die ermittelten Verschleißzustandskennwerte können auf einer zwei- oder dreidimensionalen Darstellung des Werkzeugs auf einer Displayeinheit an den jeweiligen Verschleißstellen quantitativ angezeigt werden, wodurch der quantitative und der qualitative Verschleißzustand des Werkzeugs für die Bedienungsperson der Werkzeugmaschine 1 auf einen Blick erkennbar ist.

Die Quantität des Verschleißes kann beispielsweise durch unterschiedliche Farben auf dem Display angezeigt werden. Durch Vorgabe von Verschleißzustandsgrenzwerten oder von Grenzwerten für den Anstieg der Messsignale können beispielsweise übermäßig verschlissene Kontaktzonen rot markiert werden. Für die Bedienungsperson ist damit auch erkennbar, ob das Werkzeug noch für bestimmte Fertigungsprogramme brauchbar ist oder nicht.

## Patentansprüche

1. Verfahren zum Überwachen des Verschleißzustandes eines Werkzeuges (2) bei der spanabhebenden Bearbeitung eines metallischen Werkstücks (4) durch eine Werkzeugmaschine (1) durch Aufnehmen von Messsignalen aus dem Zerspanungsprozess mit mindestens einem Sensor (6), und durch Transformieren der Messsignale des Sensors (6) mittels einer Wavelet-Funktion in Wavelet-Koeffizienten, wobei die daraus resultierenden Wavelet-Koeffizienten zur Berechnung von Verschleißzustandskennwerten für das Werkzeug (2) verwendet werden,
**dadurch gekennzeichnet,**
**dass** die aus dem Zerspanungsprozess resultierende Schwingungen eines zumindest aus dem Werkzeug (2) und dem metallischen Werkstück (4) bestehenden Schwingungssystems mit mindestens einem Schwingungssensor (6) aufgenommen werden und dass bei sich verändernden Schnitt-, Eingriffsund/oder Kontaktbedingungen zwischen Werkzeug (2) und Werkstück (4) der Verschleißzustand anhand der Veränderung eines Verschleißzustandskennwertes an vorgegebenen Messstellen mit vergleichbaren Schnitt-, Eingriffsund/oder Kontaktbedingungen an denselben oder unterschiedlichen Werkstücken (4) beurteilt wird.

2. Verfahren nach Anspruch 1, **dadurch gekennzeichnet, dass** das Schwingungssignal im dreidimensionalen Raum in mindestens einer Raumachse erfasst wird.

3. Verfahren nach Anspruch 1 oder 2, **dadurch gekennzeichnet, dass** das Schwingungssignal im dreidimensionalen Raum in allen Raumachsen erfasst wird.

4. Verfahren nach Anspruch 3, **dadurch gekennzeichnet, dass** das dreidimensionale Schwingungssignal in jeder Raumachse einzeln ausgewertet wird und jeweils ein richtungsorientiertes Schwingungssignal ergibt, um mittels der Wavelet-Funktion aus den jeweiligen Wavelet-Koeffizienten jeweils Verschleißzustandskennwerte zu bilden.

5. Verfahren nach Anspruch 3, **dadurch gekennzeichnet, dass** das dreidimensionale Schwingungssignal in jeder Raumachse einzeln ausgewertet wird und vor der Transformation mittels der Wavelet-Funktion zu einem resultierenden Schwingungssignal z.B. durch Addition, Verhältnisbildung, Multiplikation oder Vektoraddition zusammengefasst wird, und dass das resultierende Schwingungssignal mittels der Wavelet-Funktion transformiert wird, um aus den Wavelet-Koeffizienten einen Verschleißzustandskennwert zu bilden.

6. Verfahren nach Anspruch 3, **dadurch gekennzeichnet, dass** das dreidimensionale Schwingungssignal in jeder Raumachse einzeln ausgewertet wird, und dass nach der Transformation der drei richtungsorientierten Schwingungssignale mittels der Wavelet-Funktion aus den jeweiligen Wavelet-Koeffizienten z.B. durch Addition, Verhältnisbildung, Multiplikation oder Vektoraddition resultierende Wavelet-Koeffizienten gebildet werden, aus denen sich ein Verschleißzustandskennwert ergibt.

7. Verfahren nach Anspruch 3, **dadurch gekennzeichnet, dass** das dreidimensionale Schwingungssignal in jeder Raumachse einzeln ausgewertet wird, und dass nach der Transformation der drei richtungsorientierten Schwingungssignale mittels der Wavelet-Funktion aus den jeweiligen Wavelet-Koeffizienten drei Verschleißzustandskennwerte gebildet werden, die z.B. durch Addition, Verhältnisbildung und/oder Multiplikation zu einem einzigen Verschleißzustandskennwert zusammengefasst werden.

8. Verfahren nach einem der Ansprüche 1 bis 7, **dadurch gekennzeichnet, dass** das Schwingungssignal an dem Werkzeug (2), an der Werkzeugaufnahme oder den die Werkzeugaufnahme mittelbar oder unmittelbar tragenden Maschinenkomponenten aufgenommen wird.

9. Verfahren nach einem der Ansprüche 1 bis 7, **dadurch gekennzeichnet, dass** das Schwingungssignal an dem Werkstück (4), an der Werkstückaufnahme oder den die Werkstückaufnahme mittelbar oder unmittelbar tragenden Maschinenkomponenten (1) der Werkzeugmaschine aufgenommen wird.

10. Verfahren nach einem der Ansprüche 1 bis 9, **dadurch gekennzeichnet, dass** ein Beschleunigungssensor, ein Schwinggeschwindigkeitssensor, ein Schwingwegsensor oder im höherfrequenten Bereich ein Körperschallsensor oder ein Schallemissionssensor als Schwingungssensor (6) verwendet wird.

11. Verfahren nach einem der Ansprüche 1 bis 9, **dadurch gekennzeichnet, dass** der Verschleißzustand eines Werkzeugs (2) bei einer spanabhebenden Bearbeitung mit unterbrochenem Schnitt überwacht wird.

12. Verfahren nach Anspruch 11, **dadurch gekennzeichnet, dass** der Verschleißzustand eines Fräswerkzeuges überwacht wird.

13. Verfahren nach Anspruch 12, **dadurch gekennzeichnet, dass** die Verschleißzustandsüberwachung des Fräswerkzeuges beim Freiformfräsen durchgeführt wird.

14. Verfahren nach einem der Ansprüche 1 bis 13, **dadurch gekennzeichnet, dass** bei wiederholter Bearbeitung gleichartiger Werkstücke (4) der Verschleißzustand des Werkzeugs (2) anhand der Veränderung des Verschleißzustandskennwertes in Relation zu einem vorgegebenen Grenzkennwert bei vergleichbaren Schnitt-, Eingriffs- und/oder Kontaktbedingungen zwischen Werkzeug (2) und Werkstück (4) an denselben oder unterschiedlichen Werkstücken (4) beurteilt wird.

15. Verfahren nach einem der Ansprüche 1 bis 14, **dadurch gekennzeichnet, dass** die vorgegebenen Messstellen mit vergleichbaren Schnitt-, Eingriffs- und/oder Kontaktbedingungen zwischen Werkzeug (2) und Werkstück (4) aus den im NC-Fertigungsprogramm der Werkzeugmaschine (1) enthaltenen Daten ermittelt werden.

16. Verfahren nach Anspruch 1 bis 15, **dadurch gekennzeichnet, dass** die vorgegebenen Messstellen mit vergleichbaren Schnitt-, Eingriffs- und/oder Kontaktbedingungen zwischen Werkzeug (2) und Werkstück (4) In Abhängigkeit von einem oder mehreren der nachfolgenden Parameter, nämlich der Werkstück-Rohteilgeometrie, der Werkstück-Fertigteilgeometrie, den dazwischenliegenden Schnittflächen, den Zerspanungsparametern und der Werkzeuggeometrie ermittelt werden.

17. , Verfahren nach einem der Ansprüche 1 bis 16, **dadurch gekennzeichnet, dass** in Abhängigkeit von den Verschleißzustandskennwerten der Verschleißzustand des Werkzeuges (2) auf einer zwei- oder dreidimensionalen Abbildung des Werkzeuges entlang der Werkzeugschneide quantitativ angezeigt wird.

## Claims

1. Method for monitoring the wear condition of a tool (2) during machining of a metal workpiece (4) by means of a machine tool (1) by detecting measuring signals generated during the machining process with the aid of at least one sensor (6) and by transforming said measuring signals detected by said sensor (6) into wavelet coefficients by means of a wavelet function, the resultant wavelet coefficients being used for calculating wear condition parameters for the tool (2),
**characterized in that**
the vibrations, which are generated during the machining process, of a vibration system comprising at least the tool (2) and the metal workpiece (4) are detected by at least one vibration sensor (6), and in the case of varying cutting, engagement and/or contact conditions between tool (2) and workpiece (4) the wear condition is evaluated on the basis of changes in a wear condition parameter at given measuring locations with comparable cutting, engagement and/or contact conditions on similar or different workpieces (4).

2. Method according to claim 1, **characterized in that** the vibration signal is detected in the three-dimensional space in at least on space axis.

3. Method according to claim 1 or 2, **characterized in that** the vibration signal is detected in the three-dimensional space in all space axes.

4. Method according to claim 3, **characterized in that** the three-dimensional vibration signal is individually evaluated in each space axis and results in a direction-oriented vibration signal such that by means of the wavelet function respective wear condition parameters are defined from the respective wavelet coefficients.

5. Method according to claim 3, **characterized in that** the three-dimensional vibration signal is individually evaluated in each space axis, and, prior to transformation, combined by means of the wavelet function to form a resultant vibration signal, e. g. by addition, ratio formation, multiplication or vector addition, and the resultant vibration signal is transformed by means of the wavelet function to determine a wear condition parameter from the wavelet coefficients.

6. Method according to claim 3, **characterized in that** the three-dimensional vibration signal is individually evaluated in each space axis, and after transformation of the three direction-oriented vibration signals resultant wavelet coefficients are determined by means of the wavelet function, e. g. by addition, ratio formation, multiplication or vector addition, from which a wear condition parameter can be obtained.

7. Method according to claim 3, **characterized in that** the three-dimensional vibration signal is individually evaluated in each space axis, and after transformation of the three direction-oriented vibration signals three wear condition parameters are determined from the respective wavelet coefficients by means of the wavelet function, the three wear condition parameters being combined, e. g. by addition, ratio formation or multiplication, to form a single wear condition parameter.

8. Method according to one of claims 1 to 7, **characterized in that** the vibration signal is detected on the tool (2), the tool receiving means or the machine components directly or indirectly supporting the tool receiving means.

9. Method according to one of claims 1 to 7, **characterized in that** the vibration signal is detected on the workpiece (4), the workpiece receiving means or the machine components (1) of the machine tool directly or indirectly supporting the workpiece receiving means.

10. Method according to one of claims 1 to 9, **characterized in that** an acceleration sensor, a vibration velocity sensor, a vibration path sensor or, in the higher-frequency range, a solid-borne sound sensor or a sound emission sensor is used as a vibration sensor.

11. Method according to one of claims 1 to 9, **characterized in that** the wear condition of a tool (2) is monitored during machining with interrupted cut.

12. Method according to claim 11, **characterized in that** the wear condition of a milling tool is monitored.

13. Method according to claim 12, **characterized in that** the wear condition monitoring of the milling tool is performed during free-form milling.

14. Method according to one of claims 1 to 13, **characterized in that** in the case of repeated machining actions on similar workpieces (4) the wear condition of the tool (2) is evaluated on the basis of the change in the wear condition parameter relative to a given limit parameter at comparable cutting, engagement and/or contact conditions between tool (2) and workpiece (4) on similar or different workpieces (4).

15. Method according to one of claims 1 to 14, **characterized in that** the given measuring locations with comparable cutting, engagement and/or contact conditions between tool (2) and workpiece (4) are determined from the data contained in the NC production program of the machine tool (1).

16. Method according to claim 1 to 15, **characterized in that** the given measuring locations with comparable cutting, engagement and/or contact conditions between tool (2) and workpiece (4) are determined as a function of one or a plurality of the following parameters, namely workpiece blank geometry, workpiece finished part geometry, intermediate cut surfaces, machining parameters and tool geometry.

17. Method according to one of claims 1 to 16, **characterized in that**, as a function of the wear condition parameters, the wear condition of the tool (2) is indicated in terms of quantity in a two-dimensional or three-dimensional representation of the tool along the cutting edge of the tool.

## Revendications

1. Procédé de surveillance de l'état d'usure d'un outil (2) lors de l'usinage par enlèvement de copeaux d'une pièce métallique (4) par une machine-outil (1), en recueillant avec au moins un capteur (6) des signaux de mesure provenant du processus d'enlèvement de copeaux, et en transformant les signaux de mesure du capteur (6) au moyen d'une fonction ondelette en coefficients d'ondelettes, les coefficients d'ondelettes qui en résultent étant utilisés pour le calcul de valeurs caractéristiques de l'état d'usure de l'outil (2),
**caractérisé en ce que** les vibrations, résultant du processus d' enlèvement de copeaux, d'un système de vibration se composant au moins de l'outil (2) et de la pièce métallique (4) sont recueillies par au moins un capteur de vibrations (6), et **en ce que**, pour des conditions de coupe, d'engagement et/ou de contact entre l'outil (2) et la pièce (4) qui varient, l'état d'usure est estimé à l'aide de la variation d'une valeur caractéristique de l'état d'usure en des endroits de mesure prédéterminés avec des conditions de coupe, d'engagement et/ou de contact comparables pour des pièces (4) identiques ou différentes.

2. Procédé selon la revendication 1, **caractérisé en ce que** le signal de vibration est saisi suivant au moins un axe de l'espace tridimensionnel.

3. Procédé selon la revendication 1 ou 2, **caractérisé en ce que** le signal de vibration est saisi suivant tous les axes de l'espace tridimensionnel.

4. Procédé selon la revendication 3, **caractérisé en ce que** le signal de vibration tridimensionnel est exploité séparément suivant chaque axe de l'espace et fournit un signal de vibration orienté selon chaque axe, pour former respectivement des valeurs caractéristiques de l'état d'usure à partir des coefficients d'ondelettes respectifs au moyen de la fonction ondelette.

5. Procédé selon la revendication 3, **caractérisé en ce que** le signal de vibration tridimensionnel est exploité séparément suivant chaque axe de l'espace et, avant la transformation au moyen de la fonction ondelette, est recomposé en un signal de vibration résultant, par exemple par addition, formation de rapport, multiplication ou addition vectorielle, et **en ce que** le signal de vibration résultant est transformé au moyen de la fonction ondelette pour former une valeur caractéristique de l'état d'usure à partir des coefficients d'ondelettes.

6. Procédé selon la revendication 3, **caractérisé en ce que** le signal de vibration tridimensionnel est exploité séparément suivant chaque axe de l'espace, et **en ce que**, après transformation au moyen de la fonction ondelette des trois signaux de vibration orientés, des coefficients d'ondelettes résultants, à partir desquels une valeur caractéristique de l'état d'usure est déterminée, sont formés à partir des coefficients d'ondelettes respectifs, par exemple par addition, formation de rapport, multiplication ou addition vectorielle.

7. Procédé selon la revendication 3, **caractérisé en ce que** le signal de vibration tridimensionnel est exploité séparément suivant chaque axe de l'espace, et **en ce que**, après transformation au moyen de la fonction ondelette des trois signaux de vibration orientés, trois valeurs caractéristiques de l'état d'usure sont formées à partir des coefficients d'ondelettes respectifs, lesquelles valeurs sont recomposées, par exemple par addition, formation de rapport et/ou multiplication pour donner une valeur caractéristique unique de l'état d'usure.

8. Procédé selon l'une des revendications 1 à 7, **caractérisé en ce que** le signal de vibration est recueilli au niveau de l'outil (2), de la fixation de l'outil ou des composants de la machine portant directement ou indirectement la fixation de l'outil.

9. Procédé selon l'une des revendications 1 à 7, **caractérisé en ce que** le signal de vibration est recueilli au niveau de la pièce (4), de la fixation de la pièce ou des composants (1) de la machine-outil portant directement ou indirectement la fixation de la pièce.

10. Procédé selon l'une des revendications 1 à 9, **caractérisé en ce qu'**un capteur d'accélération, un capteur de vitesse des vibrations, un capteur d'amplitude des vibrations ou, dans le domaine des hautes fréquences, un capteur de bruit de structure ou un capteur d'émission acoustique, est utilisé comme capteur de vibrations (6).

11. Procédé selon l'une des revendications 1 à 9, **caractérisé en ce que** l'état d'usure d'un outil (2) est surveillé lors d'un usinage par enlèvement de copeaux avec coupe interrompue.

12. Procédé selon la revendication 11, **caractérisé en ce que** l'état d'usure d'un outil à fraiser est surveillé.

13. Procédé selon la revendication 12, **caractérisé en ce que** la surveillance de l'état d'usure de l'outil à fraiser est effectuée lors d'un fraisage de forme libre.

14. Procédé selon l'une des revendications 1 à 13, **caractérisé en ce que**, lors de l'usinage répété de pièces similaires (4), l'état d'usure de l'outil (2) est estimé à l'aide de la variation de la valeur caractéristique de l'état d'usure relativement à une valeur limite prédéterminée pour des conditions de coupe, d'engagement et/ou de contact comparables entre l'outil (2) et la pièce (4) pour des pièces (4) identiques ou différentes .

15. Procédé selon l'une des revendications 1 à 14, **caractérisé en ce que** les emplacements de mesure prédéterminés avec des conditions de coupe, d'engagement et/ou de contact comparables entre l'outil (2) et la pièce (4) sont déterminés à partir des données contenues dans le programme de fabrication par commande numérique de la machine-outil (1).

16. Procédé selon revendication 1 à 15, **caractérisé en ce que** les emplacements de mesure prédéterminés pour des conditions de coupe, d'engagement et/ou de contact comparables entre l'outil (2) et la pièce (4) sont déterminés en fonction d'un ou de plusieurs des paramètres suivants, à savoir la géométrie de la partie brute de la pièce, la géométrie de la partie finie de la pièce, les surfaces de coupe intermédiaires, les paramètres d'enlèvement de copeaux et la géométrie de l'outil.

17. Procédé selon l'une des revendications 1 à 16, **caractérisé en ce que** l'état d'usure de l'outil (2) est indiqué quantitativement en fonction des valeurs caractéristiques de l'état d'usure par une représentation en deux ou trois dimensions de l'outil le long de la coupe effectuée par l'outil.
